# DEMANDE DE BREVET EUROPEEN

(11) **EP 4 793 610 A1**
(43) Date de publication de la demande: **19.08.2026**
(21) Numéro de dépôt: 25206656.8
(22) Date de dépôt: 03.10.2025
(51) Int. Cl.: G01L 3/10, B62D 6/10, G01D 5/14, G01L 5/22, B62D 15/02

(54) **CAPTEUR DE POSITION À PRÉCISION AMÉLIORÉE**

(30) Priorité: 14.02.2025 FR 2501588
(71) Demandeur: Moving Magnet Technologies, 25000 Besançon (FR)
(72) Inventeur: FRACHON, Didier, 25000 BESANÇON (FR)
(74) Mandataire: IP Trust

(57) **Abrégé**

La présente invention concerne un capteur de position, notamment destiné à la détection de la torsion d'une colonne de direction, constitué par
- une première structure magnétique comprenant une pluralité de pôles aimantés de polarités opposées,
- et une deuxième structure ferromagnétique formée par deux culasses ferromagnétiques, chacune munie d'une zone de fermeture de flux; sensiblement discale ou tubulaire définissant, avec la zone de fermeture de flux de l'autre culasse ferromagnétique, un entrefer d'épaisseur *d*₂, défini par une surface médiane, dans lequel est placé au moins un élément magnétosensible, chacune desdites culasses ferromagnétiques présentant une multiplicité de dents; s'étendant chacune en vis-à-vis de la pluralité de pôles aimantés de la première structure magnétique, lesdites dents étant reliées la zone de fermeture de flux,
caractérisé en ce que chacune desdites culasses présente des prolongements s'étendant, depuis la zone de fermeture de flux, au-delà de la zone de fermeture de flux de l'autre culasse ferromagnétique d'une longueur *d*₁, mesurée dans une direction normale à la surface médiane, de sorte que *d*₁ > *d*₂.

## Description

### Domaine de l'invention

La présente invention concerne le domaine des capteurs de position, et plus particulièrement les capteurs de position destinés à la mesure de la torsion d'une colonne de direction, sans que cette application ne soit exclusive.

De tels capteurs reposent sur l'utilisation d'un aimant permanent et d'un circuit magnétique complexe pour détecter la variation de torsion entre deux arbres, l'arbre d'entrée et l'arbre de sortie, connectés par une barre de torsion dont la raideur est calibrée. Lorsque la barre de torsion est soumise à un couple, l'arbre d'entrée et l'arbre de sortie se déplacent l'un par rapport à l'autre. Un aimant permanent est fixé soit à l'arbre d'entrée, soit à l'arbre de sortie. Cet aimant est magnétisé dans une direction circonférentielle, créant un champ magnétique autour de lui. Deux culasses ferromagnétiques sont utilisées pour canaliser et moduler le champ magnétique généré par l'aimant permanent.

Le champ magnétique généré par l'aimant permanent est modifié par la position relative des deux culasses ferromagnétiques par rapport à l'aimant. Lorsque la torsion se produit, l'arbre d'entrée et l'arbre de sortie tournent l'un par rapport à l'autre, ce qui modifie l'alignement des dents des deux culasses. Cela change la configuration du champ magnétique dans cette région.

Le système mesure la torsion de la barre en détectant les variations du champ magnétique causées par la différence d'alignement entre les deux culasses ferromagnétiques et l'aimant permanent. Cette information est ensuite convertie en un signal électrique par le capteur magnétique, permettant de déterminer l'angle de torsion et, par conséquent, le couple appliqué sur la colonne de direction.

Un capteur à effet Hall ou un capteur magnétorésistif, est positionné pour détecter la densité du flux magnétique qui varie en fonction de l'alignement des culasses et de l'aimant. En mesurant cette densité de flux, le capteur peut déterminer l'angle de torsion de la barre, donc la différence de rotation entre les deux arbres.

Le circuit magnétique formé par l'aimant permanent et les culasses crée un chemin précis pour les lignes de flux, et la densité de ces lignes varie avec la torsion, fournissant ainsi des informations sur l'angle de rotation relatif.

Ce type de capteur est utilisé dans des applications comme la direction assistée électrique, où il est important de connaître précisément l'effort exercé par le conducteur pour ajuster l'assistance en conséquence.

De tels capteurs sont toutefois sensibles aux champs magnétiques parasites provenant d'équipements électriques (moteurs électriques, relais électromagnétiques, ...) placés à proximité du capteur. On a proposé dans l'art antérieur différentes solutions pour réduire la sensibilité de tels capteurs aux champs magnétiques parasites.

### Etat de la technique

On connaît dans l'état de la technique un capteur décrit dans le brevet FR2821668.

Ce capteur de position est constitué par une première structure magnétique comprenant une pluralité d'aimants aimantés radialement et une deuxième structure magnétique comprenant deux couronnes ferromagnétiques présentant une pluralité de dents et définissant un entrefer dans lequel est placé au moins un élément magnétosensible, les deux structures magnétiques étant solidaires respectives de deux parties en rotation relative. Pour réduire les perturbations provenant de champs magnétiques extérieurs, les deux couronnes ferromagnétiques sont imbriquées et présentent chacune une partie sensiblement tubulaire formant des dents orientées axialement, reliées par une zone de fermeture de flux transversale, l'entrefer de détection étant délimité par lesdits zones de fermeture de flux.

Le brevet EP3931065 décrit -un capteur de position, notamment destiné à la détection de la torsion d'une colonne de direction, constitué d'une première structure magnétique aimantée rotorique comprenant une pluralité d'aimants, d'une seconde structure statorique comprenant deux couronnes prolongées de dents orientées axialement et imbriquées, et d'une troisième structure collectrice fixe constituée de deux pièces de collecte de flux qui définissent au moins un entrefer dans lequel est placé au moins un élément magnéto sensibles. Les pièces de collecte de flux et les couronnes dentées définissent entre elles une perméance magnétique indépendante de la position radiale et angulaire relative de ladite seconde structure statorique par rapport à ladite troisième structure collectrice. Des zones de collecte secondaire sont terminées par des épanouissements plans formant les deux pôles dudit entrefer et en ce que le plan médian transversal (P) dudit entrefer coupe au moins un desdits prolongements.

Le brevet EP3931066 décrit un capteur de position, notamment destiné à la détection de la torsion d'une colonne de direction, constitué d'une première structure magnétique aimantée rotorique comprenant une pluralité d'aimants, de deux pièces de collecte de flux qui définissent au moins un entrefer dans lequel est placé au moins un élément magnéto sensible caractérisé en ce que chaque pièce de collecte présente au moins une zone de collecte primaire, située dans la zone de collection du flux d'aimant et prolongée par au moins un prolongement présentant au moins une zone de collecte secondaire, en ce que lesdites zones de collecte secondaire sont terminées par des épanouissements plans formant les deux pôles dudit entrefer et en ce que le plan médian transversal dudit entrefer coupe au moins un desdits prolongements.

Le brevet FR2824910 décrit un capteur magnétique qui comporte une barre de torsion en alignement coaxial avec des arbres d'entrée et de sortie, un aimant annulaire fixé à une extrémité axiale de l'arbre d'entrée, une paire de culasses magnétiques fixées à une extrémité axiale de l'arbre de sortie, et un capteur magnétique pour détecter l'induction magnétique qui est générée entre la paire de culasses magnétiques. Chacune des culasses est munie de griffes, uniformément espacées à la circonférence de la culasse, et dont le nombre est égal à celui des pôles N ou S disposés en alternance à la circonférence de l'aimant. Le capteur magnétique est introduit dans un espace axial entre la paire de culasses magnétiques sans venir en contact avec celles-ci.

La demande de brevet US2024/142325 décrit une solution de détection de couple présentant, dans un état où le couple n'est pas généré, un chevauchement avec un pôle magnétique d'un aimant, le chevauchement se faisant, par exemple lorsque le pôle N est projeté dans la direction radiale à partir de celui-ci, entre le pôle magnétique et l'aimant l'ayant projeté. En outre, une seconde unité de détection de magnétisme présente, dans un état où le couple n'est pas généré, un chevauchement avec un pôle magnétique différent du pôle magnétique d'un aimant recouvrant la première unité de détection de magnétisme, le chevauchement se faisant, par exemple lorsque le pôle S est projeté dans la direction radiale à partir de celui-ci, entre le pôle magnétique et l'aimant l'ayant projeté. Un dispositif de commande de moteur correspondant à une unité de calcul du système de détection de couple calcule une somme d'une valeur concernant l'intensité d'un champ magnétique détecté par la première unité de détection de magnétisme et une valeur concernant l'intensité d'un champ magnétique détecté par la seconde unité de détection de magnétisme.

### Inconvénients de l'art antérieur

Les solutions de l'art antérieur présentent plusieurs inconvénients.

Elles sont dépourvues de collecteurs et dans ce cas présentent un faible taux de flux collecté et ne sont pas immunes aux champs perturbateurs externes au fonctionnement du capteur, ou elles mettent en œuvre des pièces de collecte de flux relativement complexes et onéreuses à fabriquer.

Certes, l'architecture de ces pièces de collecte de flux permet de compenser les champs perturbateurs, mais au coût de l'ajout de surfaces de compensation additionnelles. Les pièces collectrices brisent de surcroit l'axisymétrie du capteur et le positionnement des collecteurs par rapport aux stators doit être soigneusement maîtrisé pour minimiser la dégradation du rapport signal sur bruit générée par les champs perturbateurs externes.

Par ailleurs, ces pièces de collecte occasionnent un encombrement radial important, rendant plus difficile l'intégration dans un équipement automobile.

### Solution apportée par l'invention

La présente invention vise à pallier les inconvénients de l'art antérieur, à cet effet l'invention porte sur un capteur de position, notamment destiné à la détection de la torsion d'une colonne de direction, constitué par :
- une première structure magnétique comprenant une pluralité de pôles aimantés de polarités opposées,
- et une deuxième structure ferromagnétique formée par deux culasses ferromagnétiques, chacune munie d'une zone de fermeture de flux sensiblement discale ou tubulaire définissant, avec la zone de fermeture de flux de l'autre culasse ferromagnétique, un entrefer d'épaisseur *d*₂, défini par une surface médiane, dans lequel est placé au moins un élément magnétosensible, chacune desdites culasses ferromagnétiques présentant une multiplicité de dents s'étendant chacune en vis-à-vis de la pluralité de pôles aimantés de la première structure magnétique, lesdites dents étant reliées la zone de fermeture de flux,
caractérisé en ce que chacune desdites culasses présente des prolongements s'étendant, depuis la zone de fermeture de flux, au-delà de la zone de fermeture de flux de l'autre culasse ferromagnétique d'une longueur *d*₁, mesurée dans une direction normale à la surface médiane, de sorte que *d*₁ > *d*₂*.*
Selon des variantes particulières de réalisation le capteur de position selon l'invention présente également une ou plusieurs des caractéristiques suivantes :
- Lesdites culasses ferromagnétiques présentent une forme identique et sont imbriquées l'une dans l'autre symétriquement par rapport à la surface médiane.
- Le nombre de prolongements de chacune des culasses ferromagnétiques soit égal au nombre de dents de chacune des culasses ferromagnétiques.
- Les prolongements sont situés en extrémité des dents.
- Chacune des dents est munie d'un prolongement.
- les zones de fermeture de flux présentent une forme d'un disque percé, ou d'un tube, les dents s'épanouissant dans une direction axiale le long de la structure ferromagnétique rotorique présentant des pôles magnétiques aimantés radialement.
- les zones de fermeture de flux présentent une forme d'un disque percé, ou d'un tube, les dents s'épanouissant dans une direction radiale le long de la structure ferromagnétique rotorique présentant des pôles magnétiques aimantés axialement.
- la structure magnétique rotorique présente un module rotorique constitué d'un aimant unipolaire aimanté dans la direction axiale interposé entre deux culasses ferromagnétiques dentée et interdigitées.
- la structure magnétique rotorique présente un second module rotorique constitué d'un aimant unipolaire aimanté dans la direction axiale interposé entre deux culasses ferromagnétiques dentées et interdigitées, les deux modules rotoriques étant superposés axialement, les aimants présentant des aimantations de sens opposé.
- la structure magnétique rotorique présente un aimant sous la forme d'une bague présentant une pluralité de pôles magnétiques aimantés radialement.
- l'aimant présente une forme crénelée, chaque créneau présentant une alternance de pôles magnétiques.
- ladite zone de fermeture de flux est constitué par ladite bande de collecte axiale formée par lesdites zones de repliement formant un angle de 180° par rapport auxdites dents.

### Description détaillée d'un exemple non limitatif de réalisation

La présente invention sera mieux comprise à la lecture de la description qui suit, concernant un exemple non limitatif de réalisation illustré par les dessins annexés où :
[FIG. 1] La figure 1 illustre une vue en perspective éclatée d'un capteur selon un premier exemple de réalisation,
[FIG. 2] La figure 2 représente une vue en perspective assemblée d'un capteur selon le premier exemple de réalisation,
[FIG. 3] La figure 3 représente une vue schématique en demi-coupe axiale du capteur selon un deuxième exemple de réalisation,
[FIG. 4] La figure 4 représente une vue en perspective d'un capteur selon un troisième exemple de réalisation,
[FIG. 5] La figure 5 représente une vue en perspective du rotor selon le troisième exemple de réalisation,
[FIG. 6] La figure 6 représente une vue en perspective d'un capteur assemblage sur un arbre d'un capteur selon le troisième exemple de réalisation,
[FIG. 7] La figure 7 représente une vue en perspective d'une variante de réalisation d'un rotor pour un capteur selon l'invention,
[FIG. 8] La figure 8 représente une vue en perspective d'une autre variante de réalisation d'un rotor pour un capteur selon l'invention,
[FIG. 9] La figure 9 représente une vue en perspective d'une variante de réalisation d'un stator pour un capteur selon l'invention,
[FIG. 10] La figure 10 représente une vue en perspective d'une variante de réalisation à collection axiale du flux rotorique d'un capteur selon l'invention,
[FIG. 11] La figure 11 représente une vue de côté de la variante présentée en figure précédente,
[FIG. 12] La figure 12 représente une vue en perspective d'une autre variante de réalisation à collection axiale du flux rotorique d'un capteur selon l'invention,
[FIG. 13] La figure 13 représente une vue en perspective d'une autre variante de réalisation d'un stator à culasses asymétriques pour un capteur selon l'invention,
[FIG. 14] La figure 14 représente une vue en perspective d'une autre variante de réalisation d'un stator pour un capteur selon l'invention.

### Principe général de l'invention

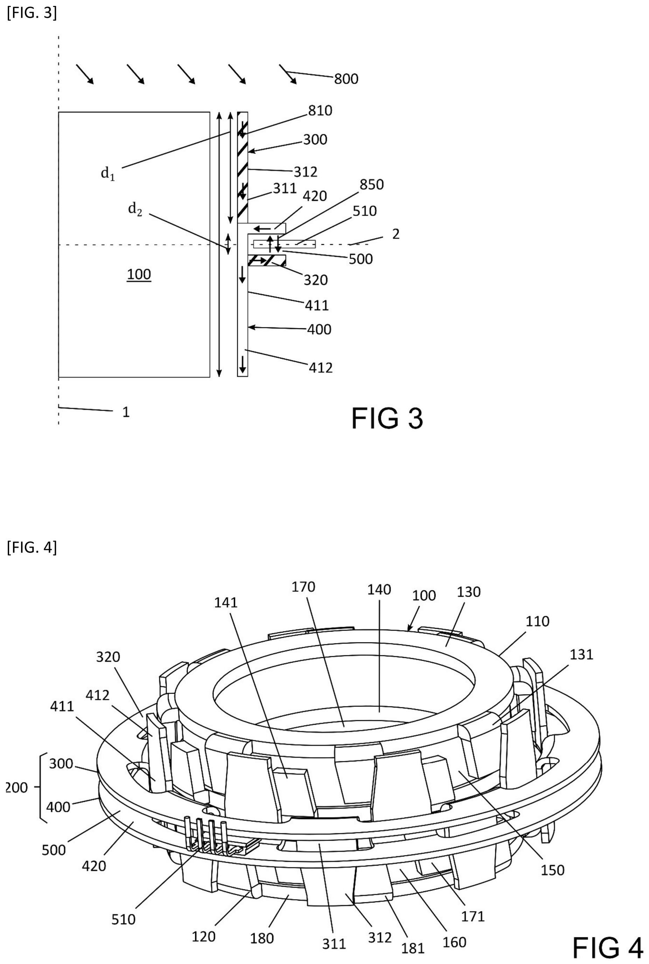

Le principe général de l'invention est à apprécier au regard des différentes figures et est plus particulièrement schématisé en figure 3, qui représente une demi-coupe axiale dont la partie située à gauche de l'axe (1) n'est pas représentée. Il concerne un capteur de position angulaire différentielle, en rotation autour d'un axe (1), notamment destiné à mesurer un couple en association avec un arbre déformable en torsion ou d'une pièce déformable dans un plan radial optimisée pour réduire l'impact des champs parasites, avec des prolongements des dents (311 ; 411) des culasses ferromagnétiques culasses (300, 400) permettant de canaliser ces perturbations.

Le capteur comprend :
a) une structure magnétique (100), dite rotorique, formée par une alternance de pôles magnétiques (101, 102) de polarités opposées. Cette structure magnétique (100) est préférentiellement de forme tubulaire ou discale, et les pôles magnétiques (101, 102) génèrent préférentiellement un flux orthogonal à la direction de rotation (radial ou axial) mais peut également présenter une variation alternative d'une composante orthogonale à la direction de rotation et d'une composante tangentielle de sorte à générer une aimantation dite « tournante ». Cette structure magnétique (100) rotorique peut être mise en mouvement de rotation relatif par rapport à
b) une structure ferromagnétique (200), dite statorique, formée de deux culasses (300, 400) présentant chacune des dents (311 ; 411) reliées par une zone de fermeture de flux respectivement (320 ; 420) définissant entre elles un entrefer (500) dans lequel est logée une sonde magnétosensible (510). La surface transversale passant par le milieu de l'entrefer (500) est appelée surface médiane (2), elle peut être un plan ou une surface tubulaire suivant la géométrie du capteur. L'entrefer (500) magnétique dans lequel est logée la sonde étant directement réalisé par les zones de fermetures de flux (320, 420) des deux culasses (300, 400), distantes d'une quantité *d*₂, sans pièces additionnelles telles que par exemple des collecteurs de flux.

Les dents (311; 411) de chacune des culasses (300 ; 400) s'étendent en vis-à-vis des pôles magnétiques (101, 102) de la structure rotorique et sont distribuées radialement en concordance avec l'alternance de pôles magnétiques (101, 102) de la structure magnétique (100) rotorique, de sorte que toutes les dents (311 ; 411) d'une même culasse (300 ; 400) voient la même polarité rotorique, toutes les dents de (411; 311) de l'autre culasse (400 ; 300) voyant une polarité opposée, de sorte à établir une circulation du flux magnétique de la structure magnétique (100) rotorique au travers de la structure ferromagnétique (200), le déphasage entre les deux structures provoquant une modulation, préférentiellement linéaire, du flux magnétique circulant dans l'entrefer (500) et mesuré par la sonde magnétosensible (510).

La structure ferromagnétique (200) est, du fait de son matériau, susceptible de collecter un champ magnétique externe au fonctionnement du capteur, dit champ perturbateur (800). Suivant la configuration géométrique des deux culasses (300, 400), ce champ perturbateur (800) peut se voir offrir un chemin privilégié au travers de ladite structure ferromagnétique (200) susceptible de traverser l'entrefer de mesure et donc de dégrader fortement la linéarité de la mesure. L'enjeu est donc d'offrir au champ perturbateur (800) d'autres chemins au travers de la structure ferromagnétique (200) et d'ajuster les chemins qui traversent l'entrefer (500) pour que le champ perturbateur acheminé (810) par chacun de ces chemins s'y compense et conduise à un champ parasite d'entrefer (850) nul.

A cet effet, chacune des deux culasses (300 ; 400) est munie de prolongements (312 ; 412) s'étendant au-delà de la zone de fermeture de flux de l'autre culasse (400 ; 300), permettant à chacune des culasses de dévier la majeure partie du champ perturbateur pour qu'il ne traverse pas l'entrefer magnétique (500) de mesure, sans agir sur la circulation du flux d'aimant, utile à la mesure. Lesdits prolongements (312 ; 412) peuvent, par exemple, être localisés à l'extrémité des dents (311 ; 411) d'une desdites culasse (300 ; 400) et dépasser axialement ou radialement de la zone de fermeture de flux (320 ; 420) de l'autre desdites culasses (400 ; 300) ou de la partie jouxtant l'enveloppe périphérique de ladite culasse (400 ; 300). Dans le cas où le capteur est soumis à des flux magnétiques externes parasites, c'est-à-dire des flux magnétiques autres que celui généré par la structure magnétique (100) rotorique, ces prolongements (312, 412) offrent une zone de captage dudit flux parasite et permettent d'en dévier la majeure partie pour qu'il ne traverse pas l'entrefer magnétique (500) de mesure, et donc la sonde magnétosensible (510). La partie résiduelle de flux parasite, appelée flux inverse, qui traverse l'entrefer magnétique (500) de mesure, est acheminée dans un sens opposé au flux parasite se couplant directement dans l'entrefer magnétique en traversant les zones de fermeture de flux (320 ; 420) de chacune des culasses (300 ; 400), appelé flux direct. Le choix des caractéristiques dimensionnelles des culasses (300, 400), permet d'équilibrer en norme le flux direct et le flux inverse conduisant à leur annulation partielle ou totale au niveau de l'entrefer (500) de mesure.

Le bénéfice est obtenu dès lors que les prolongements (312 ; 412) d'une des deux culasses (300 ; 400) s'étendent d'au moins une quantité *d*₁ au-delà de la zone de fermeture de flux (320 ; 420) de l'autre desdites culasses (300 ; 400), avec *d*₁ *> d*₂*, d*₂ étant l'épaisseur de l'entrefer (500) de mesure définie par les deux culasses imbriquées. En d'autres termes, lorsque les culasses (300 ; 400) sont imbriquées, les zones de fermeture de flux (320, 420) forment l'entrefer (500) magnétique caractérisé par la surface médiane (2), et une partie de chacune des culasses (300 ; 400), qui constitue une continuité mécanique et magnétique, s'étend depuis sa zone de fermeture de flux (320 ; 420), traverse la surface médiane (2) et se prolonge au-delà de la zone de fermeture de flux (320 ; 420) de l'autre desdites culasses (300 ; 400), les prolongements (312 ; 412) étant tout ou partie de la continuité magnétique et mécanique.

Le dimensionnement de ces différents éléments est choisi par compromis notamment pour :
- Conduire le maximum de flux parasite hors de la zone de mesure de l'induction magnétique par la sonde magnéto-sensible,
- Minimiser les surfaces ferromagnétiques susceptibles de collecter des flux parasites radiaux et axiaux,
- Compenser les flux collectés par une inversion des flux parasites, sans dégradationc du flux utile induit par la structure magnétique (100) rotorique,
- Optimiser l'encombrement axial et l'encombrement radial,
- Optimiser les coûts de fabrication.

Pour des raisons de facilité de fabrication et de compensation des flux perturbateurs, il est particulièrement avantageux que les deux culasses (300, 400) soient identiques et soient disposées de manière symétrique par rapport au plan transversal médian (2).

Il est également préférentiel que les deux culasses présentent une symétrie de révolution, soit la répétition circulaire d'un même motif, de sorte à éviter d'offrir au champ perturbateur des chemins de flux singulier pouvant perturber la sonde magnétosensible.

Différentes géométries de la structure ferromagnétique (200) statorique, permettant de réaliser la compensation du flux parasite directement grâce aux culasses (300, 400) seront présentées au travers des exemples particuliers de réalisation.

A titre d'exemple, mais de manière non limitative, lorsque le capteur est à géométrie tubulaire avec collection radiale de flux, les deux culasses (300, 400) sont imbriquées de telle sorte que les dents (311, 312) de l'une des culasses (300) s'étendent en direction axiale opposée à celles des dents (411, 412) de l'autre culasses (400). Lorsque le capteur est à géométrie discale avec collection axiale de flux, les deux culasses (300, 400) présentent des dents s'étendant radialement et peuvent être imbriquées d'un même côté de la structure magnétique (100) rotorique, ou être disposées axialement de part et d'autre de la structure magnétique (100) rotorique pour la prendre en « sandwich ». Les deux culasses (300, 400) sont solidarisées par un moyen connu de l'homme de métier pour former la structure ferromagnétique (200).

Également différentes configurations de la structure magnétique (100) rotorique seront illustrées au travers des exemples détaillés. La structure rotorique peut être vue comme une variable d'ajustement dont la configuration choisie permet de :
- Minimiser la sensibilité aux champs perturbateurs,
- Minimiser le coût,
- Maximiser le flux magnétique de mesure,
- Faciliter le processus d'assemblage ou la ligne de fabrication,
sans déroger aux principes généraux et aux bénéfices énoncés pour la structure statorique.

A partir de ce principe général, différentes réalisations seront décrites plus en détail.

L'invention comprend également l'intégration de ce capteur de couple pour diverses applications, comme notamment la détection du couple appliqué sur une colonne de direction automobile, ou celui appliqué par un utilisateur de bicyclette sur le pédalier, ou tout autre utilisation connue de ce type de technologie.

Il est également prévu d'associer ce capteur de couple à un capteur de position angulaire, par exemple connu du brevet EP2452160B1 pour une mesure directe du champ du rotor sur un tour ou du brevet EP2609401B1 illustrant une des nombreuses techniques permettant d'obtenir l'information de position angulaire absolue sur plusieurs tours.

### Description d'un premier exemple de réalisation

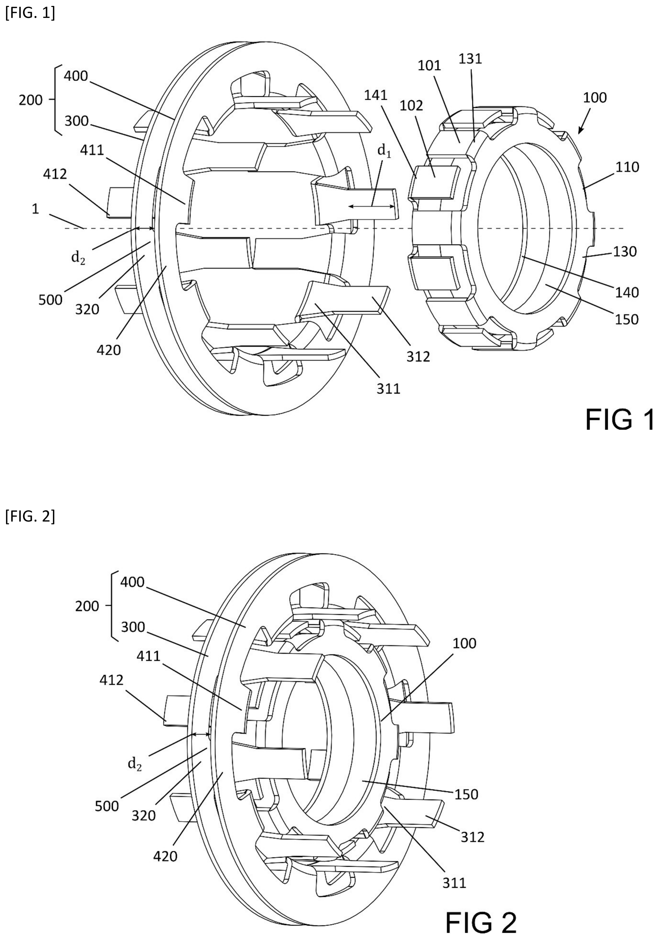

Les figures 1 et 2 illustrent un premier exemple de réalisation de capteur à géométrie tubulaire, la figure 1 présentant une vue en perspective éclatée où le rotor et le stator sont séparés, et la figure 2 représentant une vue en perspective où le rotor et le stator sont en position de fonctionnement. Les culasses (300, 400) de la structure ferromagnétique (200) statorique présentent des zones fermeture de flux (320, 420) s'étendant radialement sous la forme d'un disque percé. Les dents (311 ; 411) s'étendent axialement à partir de la périphérie interne de la zone de fermeture de flux (320, 420). Les dents (311; 411) sont terminées axialement par des prolongements (312 ; 412), les prolongements de chacune des culasses (300 ; 400) étant configurés pour saillir axialement de la zone de fermeture de flux de l'autre desdites culasses (400 ; 300) lorsqu'elles sont imbriquées et solidarisées pour former la structure ferromagnétique (200).

La structure magnétique (100) rotorique présente un module rotorique (110) muni d'un aimant discal (150) unipolaire aimanté dans la direction axiale, celle de l'axe (1), intercalé entre deux culasses ferromagnétiques dentées (130, 140) permettant le rebouclage du flux magnétique de l'aimant discal (150). Les deux culasses ferromagnétiques dentées (130, 140) se présentent sous la forme de disques dont s'étendent axialement des dents (131, 141) en périphérie de l'aimant discal (150) et en direction de l'autre desdites deux culasses ferromagnétiques dentées (130, 140), lesdites dents (131, 141) d'une culasse s'imbriquant ainsi entre les dents de l'autre culasse pour permettre le rebouclage du flux magnétique de l'aimant discal (150). Ceci permet de former, de manière connue, une alternance de pôles magnétiques (101, 102) à partir d'un aimant unipolaire, le nombre de pôles correspondant au nombre total de dents (131, 141). Ce mode de réalisation du rotor est avantageux dans une perspective de moindre coût et robustesse améliorée vis-à-vis des champs perturbateurs. En effet, cette configuration permet de réaliser un rotor multipolaire présentant de bonnes performances magnétiques à partir d'un aimant unipolaire simple de conception et très peu couteux. De plus, les deux culasses ferromagnétiques dentées (130, 140) permettent de canaliser une partie du flux perturbateur extérieur et donc de l'empêcher de se coupler dans la structure ferromagnétique (200) statorique. Ceci permet d'éviter des effets de saturation magnétique de la structure ferromagnétique statorique (200) conduisant éventuellement à une mauvaise compensation du champ perturbateur au niveau de l'entrefer de mesure (500), mais également à une dégradation du rapport signal sur bruit en augmentant les fuites magnétiques du flux d'aimant.

Cette fonction de blindage peut également être amplifiée par le montage du rotor sur un axe ferromagnétique.

Ce premier exemple de réalisation constitue une variante optimale vis à vis des enjeux de robustesse aux champs perturbateurs et de la diminution des coûts mais l'invention concerne également des variantes de réalisation de la structure statorique et de la structure rotorique.

### Description d'une première variante de réalisation du rotor

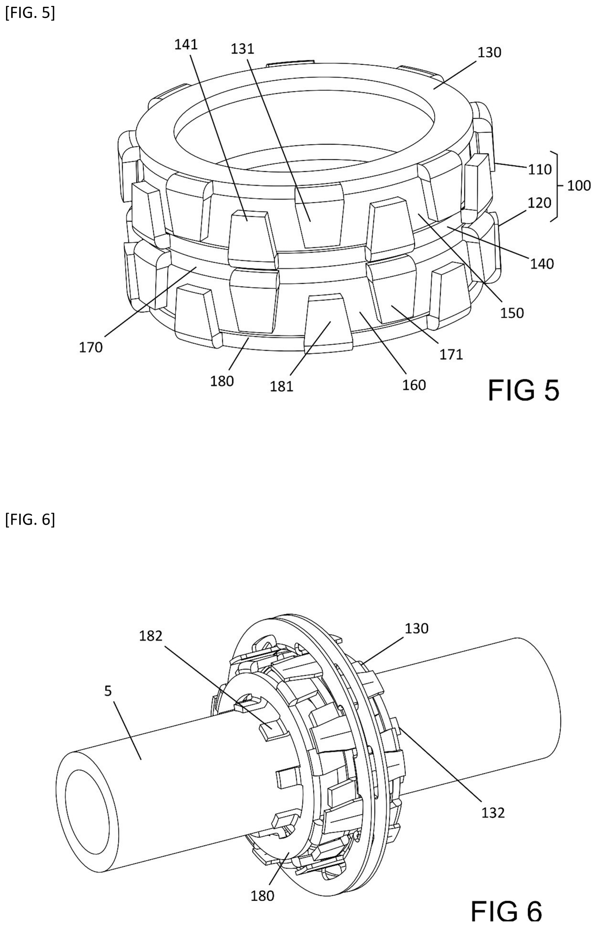

Les figures 4 et 5 illustrent une variante de réalisation du rotor. La figure 4 représentant une vue en perspective du circuit magnétique complet du capteur, la figure 5 une vue en perspective du rotor seul. Ce mode de réalisation diffère du mode de réalisation précédent présenté en figure 1 et 2 en ce que la structure rotorique présente deux modules rotoriques (110, 120) superposés axialement. Ce mode de réalisation est avantageux lorsqu'un niveau d'induction plus important doit être généré par la structure magnétique rotorique (100). En effet, l'utilisation d'un aimant (150) de rémanence plus élevée ou de longueur axiale plus importante conduit à la saturation magnétique des tôles ferromagnétiques (130, 140) du rotor et ne permet pas un couplage de flux plus important entre le rotor et le stator.

Les modules rotoriques (110, 120) présentent chacun un aimant (150, 160) aimanté axialement, mais dans un sens opposé, de sorte à éviter que le flux d'aimant (150) du premier module rotorique (110) se couple directement dans l'aimant (160) du second module rotorique (120), sans fuiter au travers des culasses ferromagnétiques dentées (140, 170) intercalées entre les deux aimants (150, 160), rendant lesdites culasses intercalaires inutiles. Comme les modules rotoriques (110, 120) présent des aimants de polarité axiale opposée, il est nécessaire de déphaser les dents d'une demi-période magnétique pour obtenir une polarité circonférentielle identique des deux modules rotoriques (110, 120). Ainsi, les dents (141, 171) des culasses ferromagnétiques dentées (140, 170) intercalées entre les deux aimants (150, 160) sont alignées angulairement et s'épanouissent dans des directions axialement opposées. De même, les dents (131, 181) des culasses ferromagnétiques dentées (130, 180) extérieures sont alignées angulairement et s'épanouissent dans des directions axialement opposées.

L'empilement de plusieurs modules rotoriques (110, 120) permet de faire croitre sensiblement linéairement l'induction maximale collectée au niveau de la sonde en fonction du nombre de modules empilés.

Dans l'exemple présenté le nombre de modules empilés est de deux, mais peut-être adapté en fonction des performances visées en prenant soin d'alterner successivement la polarité axiale des aimants.

Il est également prévu que les culasses ferromagnétiques dentées (140, 170) intercalées soit réalisées dans une seule et même pièce.

La figure 6 représente une variante des culasses ferromagnétiques dentées (130, 180) extérieures des modules rotoriques (110, 120) présentant des griffes (132, 182) s'épanouissant axialement depuis la périphérie intérieure desdites culasses (130, 180) de sorte à assurer un maintien du rotor sur un arbre (5).

### Description d'une quatrième variante de réalisation du rotor

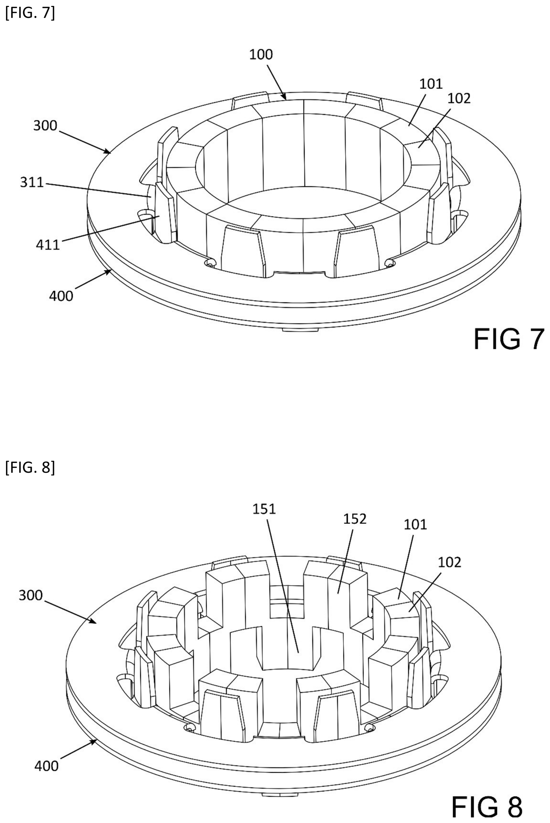

La figure 7 illustre une variante de réalisation du rotor. Ce mode de réalisation diffère des modes de réalisation précédents en ce que le rotor est muni d'un aimant (150) sous la forme d'une bague multipolaire, les pôles magnétiques s'alternant de manière circonférentielle. Cette variante de réalisation est avantageuse dans le cas où de bonnes performances magnétiques veulent être atteintes, en souhaitant simplifier au maximum le nombre de pièces à assembler et lorsque la sensibilité aux champs perturbateurs n'est pas drastique.

Un grade d'aimant présentant de meilleures performances magnétiques, comme un aimant fritté à base de Néodyme, pourra éventuellement être choisi. Ce mode de réalisation demande également le recours à un outillage d'aimantation spécifique pour imprimer l'alternance de pôles magnétiques.

### Description d'une cinquième variante de réalisation du rotor

La figure 8 illustre une variante de réalisation du rotor. Ce mode de réalisation diffère du mode de réalisation précédent en ce que l'aimant (150) présente un crénelage avec une alternances de protubérances (151, 152) s'épanouissant dans la direction axiale.

Ce mode de réalisation est avantageux pour diminuer le coût de réalisation de l'aimant bague, présenté en figure précédente. En effet, dans l'exemple de réalisation présenté en figure 7, on peut remarquer que les pôles magnétiques (101, 102) du rotor ne sont en vis-à-vis des dents du stator que sur une partie seulement de leur extension axiale. Comme le capteur est destinée à mesurer un déplacement différentiel inférieur à une période magnétique, les parties de l'aimant (150), qui ne sont pas en vis-à-vis d'une dent, génèrent un flux magnétique qui n'est pas utile à la détection et peut même perturber la mesure. Ces parties peuvent donc être supprimées pour conduire à la forme crénelée présentée en figure 8.

Chacune des protubérance (151, 152) est munie d'une paire de pôle magnétiques (101, 102), le capteur fonctionnant autour des transitions magnétiques, de sorte à qu'un flux magnétique ne traverse la sonde à l'état de repos. Toutefois ceci n'est pas limitatif et on pourrait imaginer travailler autour d'un maximum de flux et de centrer les dents non pas face à une transition entre deux pôles magnétiques (101, 102), mais en face du centre d'un pôle magnétique.

Un aimant (150) crénelé peut par exemple être réalisé par frittage de poudre ou par injection d'un aimant à alliage plastique.

### Description d'une première variante de réalisation du stator

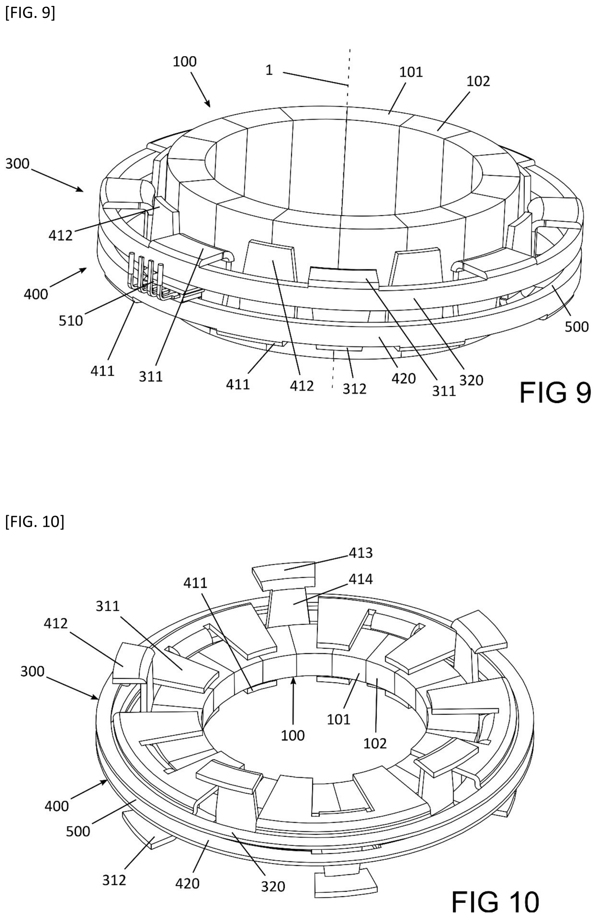

La figure 9 illustre une variante de réalisation de la structure statorique (200). Ce mode de réalisation diffère du mode de réalisation présenté en figure 7 en ce que les zones de fermeture de flux (320, 420) des culasses ferromagnétiques (300, 400) présentent une forme tubulaire et définissent un entrefer (500) tubulaire.

Les dimensionnements de ces différents éléments sont choisis pour :
- Minimiser les surfaces ferromagnétiques susceptibles de collecter des flux parasites radiaux et axiaux,
- Compenser les flux collectés par une inversion des flux parasites,
- Réduire l'encombrement radial.

Ce mode de réalisation est avantageux pour minimiser les surfaces des culasses (300, 400) dont la normale est colinéaire à l'axe (1), de sorte à collecter le minimum de champ perturbateur dont l'incidence est selon l'axe (1). En effet, le champ perturbateur incident de manière normale à la surface médiane de l'entrefer est le plus susceptible de perturber le rapport signal sur bruit du capteur.

De par la faible extension radiale de l'entrefer, cette configuration a toutefois le désavantage de rendre plus sensible les performances du capteur au positionnement relatif entre la sonde (510) et la structure statorique (200).

### Description d'une variante de réalisation du capteur à flux axial

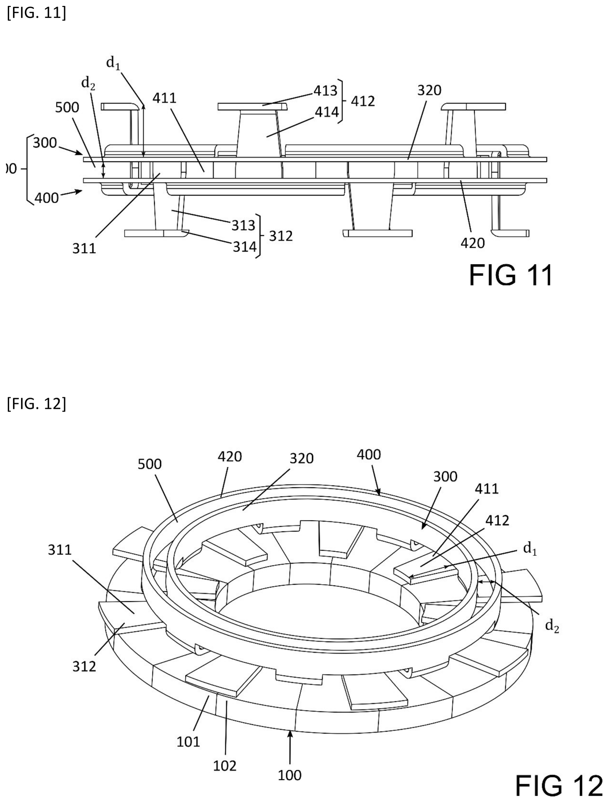

Les figures 10 et 11 illustrent une variante de réalisation du capteur pour réaliser une collecte axiale du flux d'aimant de la structure magnétique rotorique (100), la figure 10 étant une vue en perspective du capteur et la figure 11 une vue de côté. Ce mode de réalisation diffère des modes de réalisation précédents en ce que l'aimant présentent une forme discale dont les pôles magnétique (101, 102), s'alternant circonférentiellement, sont aimantés dans la direction axiale. La structure magnétique (100) rotorique est imbriquée axialement entre les culasses (300, 400) de la structure ferromagnétique (200) statorique. De sorte à collecter le flux d'aimant, les culasses ferromagnétiques (300, 400), de la structure ferromagnétique (200) statorique, présentent des dents (311, 411) s'épanouissant dans la direction radiale depuis les zones de fermeture de flux (320, 420) annulaires définissant l'entrefer (500), les dents (311) d'une culasse (300) jouxtant une extrémité axiale de l'aimant (150), les dents (411) de l'autre culasse (400) jouxtant l'autre extrémité axiale de l'aimant (150). Les prolongements (312, 412) permettant la compensation du flux perturbateur, s'étendent axialement depuis leur zone de fermeture de flux (320, 420) respectives. Lesdits prolongements sont formés d'une zone d'extension axiale (313, 413) terminée par une zone d'extension radiale (314, 414), cette dernière permettant d'augmenter le flux perturbateur collecté par les prolongements pour optimiser l'annulation du flux au niveau de la sonde magnétosensible logée dans l'entrefer (500). En effet, les dents (311, 411) s'étendant radialement, offrent une importante surface de collecte du champ perturbateur qui s'additionne à celui collecté par les zones de fermeture de flux (320, 420). L'enjeu est donc d'optimiser en conséquence la surface des zones d'extension radiales (314, 414) pour obtenir la compensation.

L'épaisseur de l'aimant peut être ajustée sans augmenter l'entrefer magnétique entre les deux zones de fermeture de flux (320, 340) grâce à une première zone d'extension axiale, ajustable, des dents (311, 411) en périphérie de l'aimant avant leur extension radiale en vis-à-vis de l'aimant.

Ce mode de réalisation est avantageux dès lors que la compacité axiale du capteur est un prérequis important.

### Description d'une variante de réalisation à collection axiale

La figure 12 illustre une variante de réalisation du capteur pour réaliser une collecte axiale du flux d'aimant de la structure magnétique rotorique (100). Ce mode de réalisation diffère du mode de réalisation précédent, présenté en figure 11 et 12, en ce que la structure magnétique (100) rotorique n'est pas imbriquée dans la structure ferromagnétique (200) statorique, mais est juxtaposée à cette dernière dans la direction axiale, les dents (311, 411) des deux culasses (300, 400) s'étendant d'un même côté de l'aimant (150). Ce mode de réalisation diffère également en ce que les zones de fermeture de flux (320, 420) présentent une forme tubulaire, définissant un entrefer (500) tubulaire dont la surface médiane (2) est un tube. Les dents (311, 411) s'épanouissent de part et d'autre des zones de fermeture de flux (320, 420) dans la direction radiale en vis-à-vis de l'aimant (150). Les prolongements (312, 412) sont situés en extrémités des dents (311, 411) et s'épanouissent dans la direction radiale en continuité desdites dents.

Ce mode de réalisation présente plusieurs avantages, tout d'abord une compacité axiale très importante et la possibilité d'introduire la sonde de manière axiale dans l'entrefer magnétique plutôt que de manière radiale telle que présenté dans d'autres modes de réalisation.

### Description d'une variante de réalisation à dents colinéaires

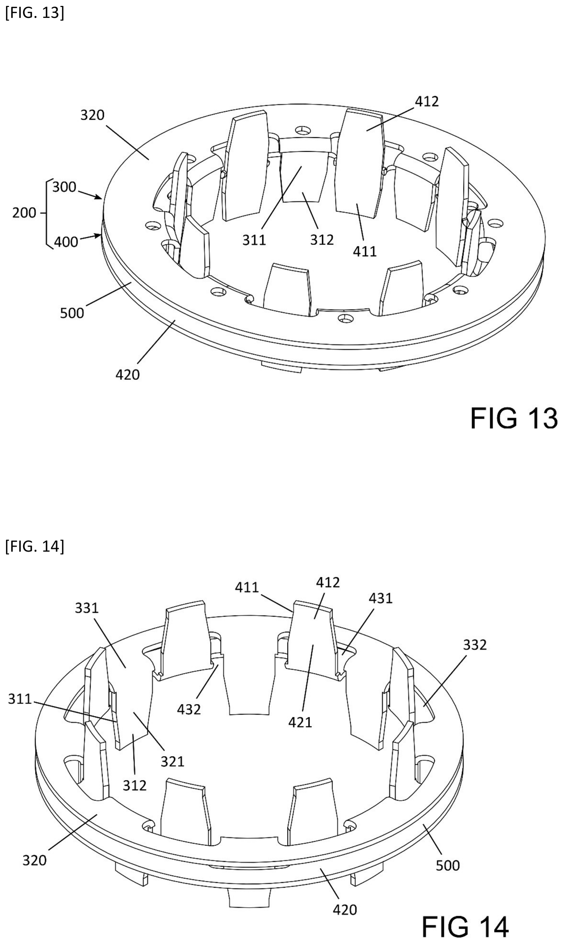

La figure 13 illustre une variante de réalisation de la structure ferromagnétique statorique minimiser l'étendue axiale de l'aimant. Ce mode de réalisation diffère du mode de réalisation présenté en figure 7 en ce que les culasses magnétiques (300, 400) présentent des dents (311, 411) s'étendant, depuis les zones de fermeture de flux (320, 420), dans la même direction et le même sens. Ainsi les dents (411) de la culasse (400) ne traversent pas la surface médiane de l'entrefer (500) mais s'étendent dans la direction opposée. Des prolongement (412) s'étendent donc dans la direction opposée des dents (411) au-delà de la zone de fermeture de flux (320) de l'autre culasse (300) de sorte à collecter le flux perturbateur conduisant à son annulation dans l'entrefer. Les dents (311) de l'autre culasse (300) s'étendent dans la direction axiale en traversant la surface médiane de l'entrefer (500), elles peuvent donc être étendues par les prolongements (412) destinés à compenser le champ perturbateur.

Ce mode de réalisation est particulièrement avantageux pour maximiser le volume d'aimant, dès lors qu'il s'agit d'un simple anneau multipolaire, contribuant à générer le flux de mesure.

### Exemple détaillé d'une structure ferromagnétique (200) statorique

La figure 14 illustre une vue de détail d'une variante de réalisation d'une structure ferromagnétique statorique selon l'invention. Chaque culasse ferromagnétique (300, 400) présente une zone de fermeture de flux (320, 420) de forme discale ajourée en son centre. Les dents (311, 411) s'étendent à partir desdites zones de fermeture de flux, elles présentent une première extension radiale (331, 431) puis se recourbent et se prolongent dans la direction axiale par une extension axiale (321, 421) en forme de tuile de sorte à épouser la surface tubulaire de l'aimant (non représenté).

Les extensions radiales (331 ; 441) de deux dents (311 ; 411) adjacentes d'une même culasse (300 ; 400) définissent une zone ajourée (332 ; 432) permettent d'accueillir l'extension axiale (421 ; 321) d'une dent (411 ; 311) de l'autre culasse (400 ; 300). L'étendue des extensions radiales (331 ; 431) est choisie pour minimiser les fuites magnétiques entre les dents (311 ; 411) d'une des culasses (300 ; 400) et la zone de fermeture de flux (420 ; 320) de l'autre desdites culasses (400 ; 300).

Les culasses (300, 400) peuvent préférentiellement être obtenue à partir d'une feuille ferromagnétique découpée et pliée pour réaliser les extensions axiales (321, 421). Il est dans ce cas nécessaire que la longueur totale des dents (311, 411) soit inférieure à la moitié du diamètre intérieur de la zone de fermeture de flux (300, 400). L'homme de métier pourrait néanmoins envisager de réaliser les culasses par d'autres procédés, par exemple par un assemblage de tôles découpées selon différents motifs et empilées dans la direction axiale, ou par frittage de poudre, ou tout autre procédé connu de l'homme de métier.

L'entrefer (500) magnétique est directement défini par l'espace situé entre les deux zones fermeture de flux (320, 420), il est destiné à recevoir la sonde magnétosensible.

Dans l'exemple présenté, toutes les dents (311, 411) sont munies de prolongements (312, 412). Ceci n'est toutefois pas limitatif de l'invention et seules certaines dents pourraient en être munies. Il est toutefois préférable de respecter une distribution angulaire régulière des prolongements (312, 412) de sorte à être moins sensible à l'orientation du champ magnétique perturbateur.

## Revendications

1. Capteur de position, notamment destiné à la détection de la torsion d'une colonne de direction, constitué par
- une première structure magnétique (100) comprenant une pluralité de pôles aimantés de polarités opposées,
- et une deuxième structure ferromagnétique (200) formée par deux culasses ferromagnétiques (300, 400), chacune munie d'une zone de fermeture de flux (320 ; 420) sensiblement discale ou tubulaire définissant, avec la zone de fermeture de flux (420 ; 320) de l'autre culasse ferromagnétique (400 ; 300), un entrefer (500) d'épaisseur *d*₂, défini par une surface médiane (2), dans lequel est placé au moins un élément magnétosensible (510), chacune desdites culasses ferromagnétiques (300, 400) présentant une multiplicité de dents (311; 411) s'étendant chacune en vis-à-vis de la pluralité de pôles aimantés de la première structure magnétique (100), lesdites dents (311; 411) étant reliées la zone de fermeture de flux (320 ; 420),
**caractérisé en ce que** chacune desdites culasses (300 ; 400) présente des prolongements (312 ; 412) s'étendant, depuis la zone de fermeture de flux (320 ; 420), au-delà de la zone de fermeture de flux (420 ; 320) de l'autre culasse ferromagnétique (400 ; 300) d'une longueur *d*₁, mesurée dans une direction normale à la surface médiane (2), de sorte que *d*₁ > *d*₂*.*

2. Capteur de position selon la revendication 1 **caractérisé en ce que** lesdites culasses ferromagnétiques (300, 400) présentent une forme identique et sont imbriquées l'une dans l'autre symétriquement par rapport à la surface médiane (2).

3. Capteur de position selon la revendication 1 **caractérisé en ce que** le nombre de prolongements (312 ; 412) de chacune des culasses ferromagnétiques (300 ; 400) soit égal au nombre de dents (311 ; 411) de chacune des culasses ferromagnétiques (300 ; 400).

4. Capteur de position selon la revendication 1 **caractérisé en ce que** les prolongements (312 ; 412) soient situés en extrémité des dents (311 ; 411).

5. Capteur de position selon la revendication précédente **caractérisé en ce que** chacune des dents (311 ; 411) est munie d'un prolongement (312 ; 412).

6. Capteur de position selon la revendication 1 **caractérisé en ce que** les zones de fermeture de flux (320 ; 420) présentent une forme d'un disque percé, ou d'un tube, les dents (311, 411) s'épanouissant dans une direction axiale le long de la structure ferromagnétique (100) rotorique présentant des pôles magnétiques (101, 102) aimantés radialement.

7. Capteur de position selon la revendication 1 **caractérisé en ce que** les zones de fermeture de flux (320 ; 420) présentent une forme d'un disque percé, ou d'un tube, les dents (311, 411) s'épanouissant dans une direction radiale le long de la structure ferromagnétique (100) rotorique présentant des pôles magnétiques (101, 102) aimantés axialement.

8. Capteur de position selon la revendication 1 **caractérisé en ce que** la structure magnétique (100) rotorique présente un module rotorique (110) constitué d'un aimant (150) unipolaire aimanté dans la direction axiale interposé entre deux culasses ferromagnétiques dentée (130, 140) et interdigitées.

9. Capteur de position selon la revendication précédente **caractérisé en ce que** la structure magnétique (100) rotorique présente un second module rotorique (120) constitué d'un aimant (160) unipolaire aimanté dans la direction axiale interposé entre deux culasses ferromagnétiques dentées (170, 180) et interdigitées, les deux modules rotoriques (110, 120) étant superposés axialement, les aimants (150, 160) présentant des aimantations de sens opposé.

10. Capteur de position selon la revendication 1 **caractérisé en ce que** la structure magnétique (100) rotorique présente un aimant (150) sous la forme d'une bague présentant une pluralité de pôles magnétiques (101, 102) aimantés radialement.

11. Capteur de position selon la revendication précédente **caractérisé en ce que** l'aimant (150) présente une forme crénelée, chaque créneau présentant une alternance de pôles magnétiques (101, 102).

12. Capteur de position selon la revendication 1 ou 2 **caractérisé en ce que** ladite zone de fermeture de flux (320 ; 420) est constitué par ladite bande de collecte axiale formée par lesdites zones de repliement (321, 322 ; 421, 422), formant un angle de 180° par rapport auxdites dents (311 ; 411).
